# EUROPEAN PATENT SPECIFICATION

(11) **EP 3 572 226 B1**
(45) Date of publication and mention of the grant of the patent: **06.04.2022**
(21) Application number: 18704294.0
(22) Date of filing: 12.01.2018
(51) Int. Cl.: B32B 7/08, B32B 9/02, B32B 9/04, B65D 39/00

(54) **CLOSURE FOR BOTTLES**
VERSCHLUSS FÜR FLASCHEN
FERMETURE POUR BOUTEILLES

(30) Priority: 12.01.2017 ES 201730017 U
(43) Date of publication of application: 27.11.2019
(73) Proprietor: DIAM BOUCHAGE, 66400 Ceret (FR)
(72) Inventor: DEL VAL GONZALEZ, Raquel, 26200 Haro (La Rioja) (ES)
(74) Representative: Casalonga
(86) International application number: PCT/IB2018/000034
(87) International publication number: WO 2018/130906

(56) References cited:
- WO-A1-2004/050495
- WO-A1-2006/115467
- ES-U- 1 108 635
- US-A- 3 774 796
- US-A- 4 363 416

## Description

### SUBJECT OF THE INVENTION

The present invention relates to a closure for bottles comprising a cap and a stopper made from cork or a similar flexible material, which allows manual opening and closure thereof without the need to use auxiliary elements such as a bottle opener.

### BACKGROUND OF THE INVENTION

Bottles and other receptacles that contain liquids, especially those intended to accommodate wine, incorporate closures that have to allow simple opening at the same time as they prevent external environmental conditions from adversely affecting the contents.

The most frequent solution in the case of wine bottles is the pressure-coupling of cylindrical stoppers in the upper end of the neck of said bottle, close to the outlet opening. Said stoppers are made from inert, resilient materials and capable of creating insulating conditions, generally cork or synthetic plastics.

Also known are stoppers with coupling to the bottle by means of a screw thread, but the closure achieved thereby does not guarantee a hermetic seal over time. Furthermore, the use of this type of stopper with a screw thread requires modification of the equipment used in bottling plants and even the acquisition of different, new equipment, with the consequent increase in costs.

When opening the bottle, it is necessary to make a perforation in the body of the stopper in order subsequently to couple the arm of an extraction device of the corkscrew type and thus exert a pulling force until the stopper can be successfully extracted from the neck.

Breakage of the stopper not infrequently occurs during said extraction, which may give rise to problems such as jamming, which prevents the exit of the liquid from the inside of the bottle, making it necessary to push the stopper fragment that has been left wedged in the neck until it drops inside the bottle, which adversely affects the quality of the liquid.

Furthermore, when the contents are not consumed completely after opening, it is difficult to re-place the stopper in order to close the bottle.

WO 2004/050495 A1 discloses a closure for bottles comprising a stopper. The stopper includes a cylindrical turning device engaged to the bottle neck of a wine bottle, and an upper cork stopper coupled with said turning device. The upper cork stopper has a plastic cap on the upper portion, and a lower cork formed on the inner portion of plastic stopper and inserted into six inner wall borders that are integrally connected with each other.

### DESCRIPTION OF THE INVENTION

The subject matter of the invention is a closure for bottles that allows manual opening and closure in a simple manner, without the need to have a corkscrew or similar element or to make any type of perforation or additional manipulation that might give rise to deterioration in the structure thereof and thereby compromise the closure and insulation capacity thereof. Likewise, the closure makes it possible to achieve stoppering that gives rise to the same conditions as those obtained by means of conventional stoppering in terms of conditions pertaining to vacuum, gas injection, etc.

To that end, the closure comprises a cap of essentially annular geometry, with a central hole into which a stopper, preferably made from cork, is partially press-fitted.

The stopper of the closure has an essentially cylindrical geometry and is intended to be press-fitted, anchored or adhered in the upper end of the neck of a bottle such that it closes off not only said neck but also the outlet opening toward the exterior, thereby simultaneously preventing the passage of harmful elements toward the interior space of the bottle and spilling toward the exterior of the liquid contained in said bottle.

The cap of the closure additionally comprises a tubular extension that surrounds part of the surface of the stopper. During use, the cap is intended to be located such that it extends beyond the upper end of the neck of the bottle, while the tubular extension is inserted into said neck. Also envisaged is the incorporation of a knurling on the lateral face of the cap in order to increase the roughness thereof and thereby facilitate gripping and manipulation thereof.

The closure thus described allows the manual opening and closure of the bottle without the need for the use of bottle openers, corkscrews or additional devices, simply by means of pulling, turning or compression exerted manually by the actual user on the lateral face of the cap, in order thus to extract the cap or to insert it.

Likewise, it may be used in bottling machines designed to press-insert cork stoppers into the neck of the bottle, maintaining the same closure characteristics thereof, it being unnecessary to make modifications to said equipment, with the consequent cost-saving. The cap of the closure further comprises a surface that may be used to add information relating to the product, the winery or similar.

The closure may be re-used on a number of occasions for the same bottle or for bottles that have lost their own closure, since it does not deteriorate as it does not need to be perforated and ensures maintenance of the contents of the bottle under perfect conditions given that it allows coupling that insulates the interior from external conditions.

The cap further comprises an upper lateral portion and a lower lateral portion and a tubular extension that extends axially downward from the upper surface, a space intended to receive the neck of the bottle being defined radially between the extension and the lateral portions.

In one embodiment, the extension comprises a screw thread on its interior radial face.

### DESCRIPTION OF THE DRAWINGS

In order to supplement the description being given, and with a view to assisting better understanding of the features of the invention, in accordance with a preferred illustrative embodiment thereof, said description is accompanied, as an integral part thereof, by a set of drawings in which, in an illustrative and non-limiting manner, the following has been represented:
Figure 1.- This shows a rear perspective view of the cap of the closure according to a first embodiment.
Figure 2.- This shows a front perspective view of the cap of figure 1.
Figure 3.- This shows a front perspective view of the closure of figure 1 or 2.
Figure 4.- This shows a detailed view of a longitudinal section through a closure according to the first embodiment, placed in a bottle.
Figure 5. - This shows a view in longitudinal section through a closure according to a second embodiment.
Figure 6. - This shows a view in longitudinal section through a closure according to a third embodiment.

### PREFERRED EMBODIMENT OF THE INVENTION

A detailed explanation of preferred illustrative embodiments of the subject of the present invention is provided below, with the aid of the aforesaid figures.

In a first embodiment, the closure 0 for bottles that is described is formed by a cap 1 of essentially annular geometry and a stopper 2 of resilient material partially connected to the cap 1, as shown in the attached figures.

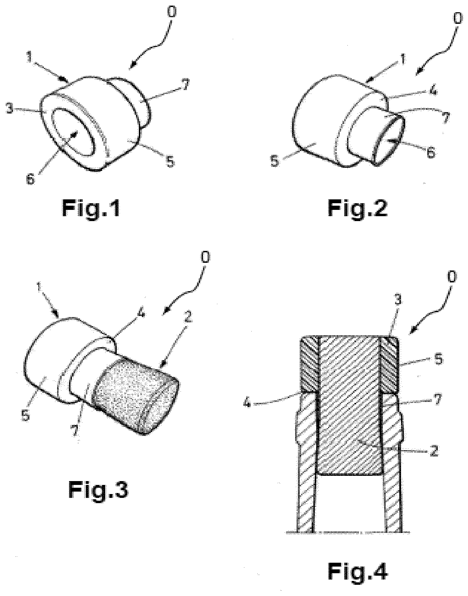

The cap 1 shown in figures 1 and 2 comprises an upper face 3, a lower face 4 opposite the upper face 3, a lateral face 5 defined between the upper 3 and lower 4 faces, a central through-hole 6 between the upper 3 and lower 4 faces and a tubular extension 7 that, starting from the lower face 4, extends longitudinally from the perimeter edge of the hole 6. Also envisaged is the incorporation of a knurling, which is not shown in the attached figures, on the lateral face 5 of the cap 1 for facilitating manual manipulation of the closure 0.

The stopper 2, of essentially cylindrical geometry, is housed partially in the hole 6 and in the tubular extension 7 of the cap 1, as is observed in figure 3, into which it is press-inserted until one of its ends is flush with the upper face 3 of said cap 1. The internal face of the hole 6 of the cap 1 may also incorporate a knurling, which is not shown, in order to increase the surface of contact with the stopper 2, thereby ensuring the connection between said stopper 2 and the cap 1.

The closure 0 thus described is connected to the bottle it is intended to close by means of the press-insertion of the stopper 2 and the tubular extension 7 inside the neck until the lower face 4 of the cap 1 rests on the outlet opening, which it closes off as illustrated in figure 4. This arrangement ensures appropriate leak tightness and further allows the manual extraction and insertion of the closure 0 without the need to use a corkscrew, bottle opener or similar auxiliary elements, or to make any perforation, it being necessary only to act manually on the cap 1.

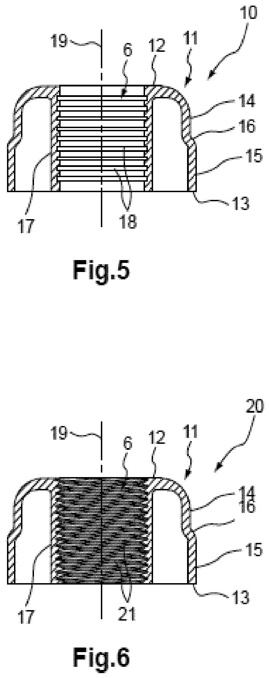

With reference to figure 5 this gives a schematic representation of a closure 10. The identical elements bear the same references.

The closure 10 comprises a cap 11 that comprises an upper face 12, a lower face 13, an upper lateral portion 14 and a lower lateral portion 15. The portions 14 and 15 are cylindrical about an axis of symmetry of the cap 11. The axial cross section of the portions 14 and 15 is substantially circular. The inside diameter of the axial cross section of the portion 14 is smaller than that of the axial cross section of the portion 15. In the example illustrated, a frustoconical portion 16 connects the portions 14 and 15. In other words, the lateral face of the cap 11 is formed by the portions 14, 15 and 16. The cap 11 comprises a tubular extension 17 that extends axially downward from the upper face 12. The tubular extension 17 is cylindrical about the axis of symmetry of the cap 11 and has a circular axial cross section. The extension 17 delimits the through-hole 6. A space intended to receive the neck of the bottle to be stoppered by the closure 10 is defined radially between an exterior cylindrical face of the extension 17 and of the interior cylindrical faces of the portions 14 and 15. On its interior radial face, the extension 17 comprises a plurality of tangential striations 18. The striations 18 allow more effective gripping of the stopper during opening of the closure 10. Although, in the example of figure 5, the extension 17 comprises tangential striations, the internal face of the hole 6 of the cap 11 may incorporate another type of surface in order to increase the surface of contact with the stopper.

The closure 10 comprises a stopper (not shown) that has the same features as the stopper 2 of the closure 0 according to the first embodiment. The stopper is housed partially in the hole 6. But, precisely, an upper part of the stopper is housed in the hole 6 and a lower part of the stopper projects downward from the cap 11.

In comparison to the closure 0 according to the first embodiment, the closure 10 has, in particular, the advantage of requiring no change in packaging lines and bottle cartons, which in general perfectly match the height of the bottles.

With reference to figure 6, this shows a schematic representation of a closure 20. The identical elements bear the same references.

The closure 20 differs from the closure 10 in that the cap 11 does not comprise the striations 18. Instead, the closure 20 comprises an internal screw thread 21. The screw thread 21 makes it possible, after having inserted a stopper with the aid of a bottler into the neck of the bottle, to cause the stopper to rise and thus to open the bottle simply by exerting a rotational movement on the cap 11.

## Claims

1. A closure (0, 10, 20) for bottles, said bottles comprising a neck and an outlet opening, wherein the closure is intended to be connected temporarily to a bottle in order to close off the latter's neck and opening, the closure comprising a cap (1, 11), for manipulating the closure, which comprises an upper face (3, 12), a lower face (4, 13) opposite the upper face (3, 12), a lateral face (5, 14, 15, 16) defined between the upper (3, 12) and lower (4, 13) faces, and a stopper (2) made from resilient material, intended to be inserted into the neck of the bottle, the cap (1) incorporating a tubular extension (7) that, starting from the lower face (4), extends longitudinally from a perimeter edge of the hole (6), said tubular extension (7) intended to partially house the stopper (2) and to be inserted into the neck of the bottle together with the stopper (2), **characterized in that** the cap (1) comprises a through-hole (6) that extends longitudinally between the upper face (3, 12) and the lower face (4, 13), the stopper (2) being partially press-fitted in the hole (6) of the cap (1, 11), the stopper (2) being flush with the upper face (3, 12) of the cap (1, 11).

2. The closure (0) for bottles as claimed in the preceding claim, **characterized in that** the lateral face (5) of the cap (1) incorporates a knurling.

3. The closure (0, 10, 20) for bottles as claimed in any of the preceding claims, **characterized in that** the stopper (2) is made from cork.

4. The closure (0, 10, 20) for bottles as claimed in any of the preceding claims, **characterized in that** the stopper (2) has an essentially cylindrical geometry.

5. The closure (0) for bottles as claimed in any of the preceding claims, **characterized in that** the cap (1) has a knurling defined on a lateral face of the hole (6).

6. The closure (0, 10, 20) for bottles as claimed in any of the preceding claims, **characterized in that** the cap (1, 11) is made from plastics.

7. The closure (0, 10, 20) for bottles as claimed in any of the preceding claims, **characterized in that** the cap (1, 11) is made from wood.

8. The closure (10, 20) for bottles as claimed in any of the preceding claims, **characterized in that** the cap (11) comprises an upper lateral portion (14) and a lower lateral portion (15), and a tubular extension (17) that extends axially downward from the upper face (12), a space intended to receive the neck of the bottle being defined radially between the extension (17) and the lateral portions (14, 15).

9. The closure (20) for bottles as claimed in claim 8, **characterized in that** the extension (17) comprises a screw thread (21) on its interior radial face.

## Patentansprüche

1. Verschluss (0, 10, 20) für Flaschen, wobei die Flaschen einen Hals und eine Auslassöffnung aufweisen, wobei der Verschluss dafür vorgesehen ist, temporär mit einer Flasche verbunden zu werden, um den Hals und die Öffnung von letzterer zu verschließen, der Verschluss einen Deckel (1, 11) zum Manipulieren des Verschlusses umfasst, der eine obere Fläche (3, 12), eine untere Fläche (4, 13), die der oberen Fläche (3, 12) gegenüberliegt, eine seitliche Fläche (5, 14, 15, 16), die zwischen der oberen (3, 12) und der unteren (4, 13) Fläche definiert ist, und einen Stopfen (2) aus einem elastischen Material, der dafür vorgesehen ist, in den Hals der Flasche eingeführt zu werden, aufweist, der Deckel (1) enthält eine rohrförmige Verlängerung (7), die sich von der unteren Fläche (4) aus in Längsrichtung von einem Umfangsrand des Lochs (6) erstreckt, die rohrförmige Verlängerung (7) dafür vorgesehen ist, teilweise den Stopfen (2) unterzubringen und zusammen mit dem Stopfen (2) in den Hals der Flasche eingeführt zu werden, **dadurch gekennzeichnet, dass** der Deckel (1) ein Durchgangsloch (6) aufweist, das sich zwischen der oberen Fläche (3, 12) und der unteren Fläche (4, 13) in Längsrichtung erstreckt, der Stopfen (2) teilweise in das Loch (6) des Deckels (1, 11) pressgepasst ist, der Stopfen (2) mit der oberen Fläche (3, 12) des Deckels (1, 11) bündig ist.

2. Verschluss (0) für Flaschen nach dem vorhergehenden Anspruch, **dadurch gekennzeichnet, dass** die seitliche Fläche (5) des Deckels (1) eine Riffelung enthält.

3. Verschluss (0, 10, 20) für Flaschen nach einem der vorhergehenden Ansprüche, **dadurch gekennzeichnet, dass** der Stopfen (2) aus Kork besteht.

4. Verschluss (0, 10, 20) für Flaschen nach einem der vorhergehenden Ansprüche, **dadurch gekennzeichnet, dass** der Stopfen (2) eine im Wesentlichen zylindrische Geometrie hat.

5. Verschluss (0) für Flaschen nach einem der vorhergehenden Ansprüche, **dadurch gekennzeichnet, dass** der Deckel (1) eine Riffelung hat, die auf einer Seitenfläche des Lochs (6) definiert ist.

6. Verschluss (0, 10, 20) für Flaschen nach einem der vorhergehenden Ansprüche, **dadurch gekennzeichnet, dass** der Deckel (1) aus Kunststoff besteht.

7. Verschluss (0, 10, 20) für Flaschen nach einem der vorhergehenden Ansprüche, **dadurch gekennzeichnet, dass** der Deckel (1, 11) aus Holz besteht.

8. Verschluss (10, 20) für Flaschen nach einem der vorhergehenden Ansprüche, **dadurch gekennzeichnet, dass** der Deckel (11) einen oberen Seitenabschnitt (14) und einen unteren Seitenabschnitt (15) aufweist sowie eine rohrförmige Verlängerung (17), die sich von der oberen Fläche (12) axial nach unten erstreckt, einen Hohlraum, der dafür vorgesehen ist, den Hals der Flasche aufzunehmen, und radial zwischen der Verlängerung (17) und den Seitenabschnitten (14, 15) definiert ist.

9. Verschluss (20) für Flaschen nach Anspruch 8, **dadurch gekennzeichnet, dass** die Verlängerung (17) ein Schraubgewinde (21) an ihrer radialen Innenfläche aufweist.

## Revendications

1. Bouchon (0, 10, 20) pour bouteilles, lesdites bouteilles comprenant un col et une ouverture de sortie, dans lequel le bouchon est destiné à être connecté temporairement à une bouteille afin d'obturer le col et la sortie de cette dernière, le bouchon comprenant un chapeau (1, 11), pour manipuler le bouchon, qui comprend une face supérieure (3, 12), une face inférieure (4, 13) opposée à la face supérieure (3, 12), une face latérale (5, 14, 15, 16) définie entre les faces supérieure (3, 12) et inférieure (4, 13), et un élément d'obturation (2) constitué d'un matériau résilient, destiné à être inséré dans le col de la bouteille, le chapeau (1) comportant une extension tubulaire (7) qui, à partir de la face inférieure (4), s'étend longitudinalement depuis un bord périphérique du trou (6), ladite extension tubulaire (7) étant destinée à contenir partiellement l'élément d'obturation (2) et à être insérée dans le col de la bouteille avec l'élément d'obturation (2), **caractérisé en ce que** le chapeau (1) comprend un trou débouchant (6) qui s'étend longitudinalement entre la face supérieure (3, 12) et la face inférieure (4, 13), l'élément d'obturation (2) étant partiellement emmanché à force dans le trou (6) du chapeau (1, 11), l'élément d'obturation (2) étant de niveau avec la face supérieure (3, 12) du chapeau (1, 11).

2. Bouchon (0) pour bouteilles selon la revendication précédente, **caractérisé en ce que** la face latérale (5) du chapeau (1) comporte un moletage.

3. Bouchon (0, 10, 20) pour bouteilles selon l'une quelconque des revendications précédentes, **caractérisé en ce que** l'élément d'obturation (2) est en liège.

4. Bouchon (0, 10, 20) pour bouteilles selon l'une quelconque des revendications précédentes, **caractérisé en ce que** l'élément d'obturation (2) a une géométrie essentiellement cylindrique.

5. Bouchon (0) pour bouteilles selon l'une quelconque des revendications précédentes, **caractérisé en ce que** le chapeau (1) a un moletage défini sur une face latérale du trou (6).

6. Bouchon (0, 10, 20) pour bouteilles selon l'une quelconque des revendications précédentes, **caractérisé en ce que** le chapeau (1, 11) est en matière plastique.

7. Bouchon (0, 10, 20) pour bouteilles selon l'une quelconque des revendications précédentes, **caractérisé en ce que** le chapeau (1, 11) est en bois.

8. Bouchon (10, 20) pour bouteilles selon l'une quelconque des revendications précédentes, **caractérisé en ce que** le chapeau (11) comprend une partie latérale supérieure (14) et une partie latérale inférieure (15), et une extension tubulaire (17) qui s'étend axialement vers le bas depuis la face supérieure (12), un espace destiné à recevoir le col de la bouteille étant défini radialement entre l'extension (17) et les parties latérales (14, 15).

9. Bouchon (20) pour bouteilles selon la revendication 8, **caractérisé en ce que** l'extension (17) comprend un filetage de vis (21) sur sa face radiale intérieure.
